(19)

Europäisches
Patentamt
European
Patent Office
Office européen
des brevets

(11) **EP 1 216 422 B1**

(12) **EUROPEAN PATENT SPECIFICATION**

(45) Date of publication and mention
of the grant of the patent:
**28.03.2007 Bulletin 2007/13**

(51) Int Cl.:
**G01S 11/14** *(2006.01)*    **G01S 5/22** *(2006.01)*
**G01S 3/808** *(2006.01)*    **G01S 3/86** *(2006.01)*

(21) Application number: **00925723.9**

(22) Date of filing: **20.04.2000**

(86) International application number:
**PCT/NL2000/000258**

(87) International publication number:
**WO 2001/025816 (12.04.2001 Gazette 2001/15)**

(54) **METHOD AND APPARATUS FOR EXTRACTING PHYSICAL PARAMETERS FROM AN ACOUSTIC SIGNAL**

VERFAHREN UND VORRICHTUNG ZUM EXTRAHIEREN PHYSIKALISCHER PARAMETER AUS EINEM AKUSTISCHEN SIGNAL

PROCEDE ET APPAREIL PERMETTANT D'EXTRAIRE DES PARAMETRES PHYSIQUES D'UN SIGNAL ACOUSTIQUE

(84) Designated Contracting States:
**AT BE CH CY DE DK ES FI FR GB GR IE IT LI LU MC NL PT SE**

(30) Priority: **01.10.1999 EP 99203211**

(43) Date of publication of application:
**26.06.2002 Bulletin 2002/26**

(73) Proprietor: **Roosnek, Nico**
**2592 AC Den Haag (NL)**

(72) Inventor: **Roosnek, Nico**
**2592 AC Den Haag (NL)**

(74) Representative: **van Essen, Peter Augustinus et al**
**Nederlandsch Octrooibureau N.V.**
**P. O. Box 29720**
**2502 LS The Hague (NL)**

(56) References cited:
**EP-A- 0 949 485**       **WO-A-96/16335**
**GB-A- 2 181 239**       **US-A- 5 258 962**
**US-A- 5 339 281**       **US-A- 5 539 859**

- **ZIOMEK L J ET AL: "ESTIMATION OF THE SPHERICAL COORDINATES OF MULTIPLE BROADBAND TARGETS VIA ADAPTIVE BEAMFORMING AND NONLINEAR LEAST SQUARES" JOURNAL OF THE ACOUSTICAL SOCIETY OF AMERICA,US,AMERICAN INSTITUTE OF PHYSICS. NEW YORK, vol. 91, no. 5, 1 May 1992 (1992-05-01), pages 2799-2804, XP000269357 ISSN: 0001-4966**

## Description

The invention relates to a method according to the preamble of claim 1.

The invention further relates to an apparatus according to the preamble of claim 18.

In general, such a method and apparatus are known (see US 5,339,281 A). These methods and apparatus have the disadvantage, however, that for a low signal-to-noise ratio it is difficult, if not impossible, to derive information from a digital signal. It has been tried to overcome these problems by using an analog phase network. This method entails analog and digital circuitry enlarging the relative phase errors. Especially the absolute phase error will be sensitive for operational conditions. Thus, the use of an analog phase network has the disadvantage that it can only be used on electric signals with a small frequency bandwidth.

The method and the apparatus according to claim 1 and 18, respectively, obviate these drawbacks.

The invention provides a method and an apparatus which is capable of extracting physical parameters from a signal having a low signal-to-noise ratio. In fact, the method and apparatus are capable of extracting physical parameters from signals having a signal-to-noise ratio of 20 dB, and even lower than OdB. Furthermore, the method and apparatus are capable of doing so with signals having a broad frequency bandwidth. In general this means that the bandwidth is at least 25% of the mean frequency, but depends also on the required accuracy in the phase calculation. Furthermore, the method can be used and the apparatus can be build using very simple components and a standard computer means.

The transducers are located above a water surface or above land, meaning that the transducers are not located below a water surface, i.e. in the water, like for example in sonar applications. The transducers can for example be land-based or air-based, or be mounted on a vehicle, in motion or stationary.

The signal is an acoustic signal, preferably a sound signal. The method and apparatus according to the current invention preferably handles signals having a rather low signal-to-noise ratio. Noise from aeroplanes is an example of a signal which is processed using the method and apparatus according to the current invention. The invention, however, is not limited to such signals.

The signal can be converted into a complex digital signal using mathematical methods which are, as such, well known in the art. A preferred method is a Hilbert filter, although other procedures can be used as well. The advantage of using a Hilbert filter is that it is very fast when implemented on a computer and needs a relative small amount of memory. An other mathematical method which is, as such, well known in the art and which can be used for the same purpose is a Fast Fourier Transform (FFT). The signals are transformed using a real FFT and transformed back using a complex FFT.

It should be noted that the Hilbert filter is known per se from, for example, "Theory and application of digital signal processing, L.R. Rabiner and B. Gold, Prentice-Hall, Inc, 1975, page. 70-73.

A further favourable embodiment of the method according to the invention, which can be applied in situations where the signal-to-noise ratio of a received signal is relatively small, is characterised in that the digital signal processor transforms the complex digital signal into a digital amplitude signal and a corresponding digital phase signal. According to the underlying inventive principle, it is essential that as much information available in the signal as possible be used while trying to determine a physical parameter from it.

According to a further aspect of the invention the method may be used for an even smaller signal-to-noise ratio if the history of the amplitude of the received signal is taken into account. This embodiment of the method is accordingly characterised in that the digital signal processor comprises an amplitude memory, in which a filtered digital amplitude signal, as obtained from previous measurements, is stored and that every time a new filtered digital amplitude signal is determined from the digital amplitude signal and from the stored filtered digital amplitude signal.

According to a further aspect of the invention the method may be used with an even smaller signal-to-noise ratio if the history of the phase of the received signal is taken into account. This embodiment is characterised in that the digital signal processor comprises a frequency memory, in which an estimated average frequency of the signal, obtained from previously obtained digital phase signals, is stored.

Subsequently, the physical parameters are estimated using an estimation technique like least squares, maximum likelihood or momentum. Preferably, the weighted least square method is used to estimate a phase history from the estimated average frequency and from the digital phase signal. In fact, a straight line is fitted to the series of phases of which the $2\pi$ ambiguity is removed by using the previous estimated frequency, with weighting factors as determined by the filtered digital amplitude signals. The history is also used in the fitting procedure depending on the time variance of the mean frequency. By using a least square method a number, the so-called $X^2$ (chi square) is obtained, which is the residue of the least square procedure and which, apart from the system error, is a measure for the statistical error or noise. The physical parameter may subsequently be determined on the basis of a zero crossing in the estimated phase history that is closest to a maximum in the filtered digital amplitude signal and a new estimated frequency. Subsequently the error in the estimated mean frequency and the zero crossing error are derived quantities from the $X^2$ error.

A favourable embodiment of the inventive method, is characterised in that the digital signal processor comprises a crosstalk memory, in which a first complex digital signal is stored, representing crosstalk signals received by other receiving means and calculated using the characteristics of the specific crosstalk signals, and that the first complex digital signal is subtracted from a complex digital signal before the complex digital signal is further processed. It is also possible to subtract the crosstalk signal in the time-domain. This can be done using analog circuitry, i.e. before the analog-to-digital converter, or using the digital signals.

The transducer according to the invention is capable of converting signals into electric signals. The signals preferably are acoustic signals, which are to be converted into electric signals. Acoustic signals suitable to be used in the invention can vary in a very broad range. It is possible to use 20 Hz signals, but also 12 kHz, up to 100 kHz and even MHz range signals can be applied. Preferably, the method of the current invention is used for acoustic signals relating to acoustic signals audible to the human ear, i.e. 20 Hz up to 20 KHz. Any signal may be used for the technique. In case of correlation of the receiving signals from two transducers located at different positions the signal due to correlation is symmetric and can be used by this technique. The length of procedure is reciprocal with the bandwidth.

The method and apparatus according to the present invention are specifically suited for application in the field of measurement of sound and specifically determination of sound levels, tracking of moving objects producing sound, like aeroplanes, cars, trains etcetera. The signal-to-noise ratio of these signals often can be very low, resulting in large errors in determined physical parameters, if these parameters can be determined altogether.

In this field, the method and apparatus according to the current invention can, with considerable success, be used to detect moving objects, like aeroplanes.

Even better results in the field of measurement of sound and tracking of moving sound sources in the air, like for example vehicles and aeroplanes, are obtained in the following way. In this case the transducer comprises at least two microphones ('phones'). If more than two phones are used, it is advantageous if the phones are not placed in one line if using three phones, and not placed in one plane when using four phones. It is thus advantageous if the phone are placed in such a way that three phones define a plane or four or more phones define a space. The distances between the phones are such that the angle sensitivity suffices, taking the turbulence of the medium into account. In case of two phones one directional angle is obtained, in case of three phones two angles are obtained with an ambiguity in the sign of the angle perpendicular to, or outside the plane defined by the three phones. In case of four phones, preferably the configuration is defined so that no phone is in the plane defined by the other phones. Preferably, the phones are placed on the vertices of a tetrahedron. Thus, the distances between the phones are the same, thus simplifying the mathematical procedures. By combining the signals from the different phones, the horizontal angle and the vertical angle are obtained.

The phones convert the acoustic signals into electric signals, which, using cross correlation, are combined such, that complex correlation time signals are generated from the real signals. These correlated signals are averaged so that less frequency components are missing and thus the averaged correlation signals are more wide frequency banded, lowering the ambiguity in the correlation signals. In case of three phones, the number of correlation signals and averaged signals are three, and in case of four phones the number of correlation signals are six. Detection and tracking motion analysis is applied on these sources via the procedures described above in order to obtain accurate time differences relating to the directional information of these sources. The parameters of the motion analysis are used for the enhancement of the correlation signals. In case of four phones the ambiguity is fully resolved by combining the time differences in the averaged correlation signals.

The acoustic signal from the moving or stationary sources is converted by the phones into electrical signals and further filtered/amplified by the pre-amplifier and converted by the analog to digital converter into series of numbers, called digital signals. By correlating these signals via a real Fast Fourier Transform (FFT) and transforming back with a complex FFT, the complex correlation signal is obtained, without using a Hilbert filter, with that reducing the sample frequency by a factor 2. However, a Hilbert filter can also be used. More generally, a digital filter is used to convolute the two signals and calculate the complex signal.

The correlation signal is averaged, reducing the intrinsic ambiguity for noise signals. The procedure is performed for all two input signal combinations. By analysing the averaged correlation signal(s), using the noisiness or variation in the signals as a measure, one or more peaks are obtained which are related to the sound sources. By using the method described above, very accurate time differences are obtained for these peaks.

Motion analysis predicts the places of the peaks in the correlation signals. By taking the motion into account, the source signal information is enhanced with regard to noise of other sources. The source information is analyzed by the algorithm described above and thus very accurate time differences are obtained for these source signals.

By combining the time differences of the peaks in the correlation source signals, the three phones configuration gives both angles with a sign ambiguity for the vertical angle. For the four phones configuration the sign ambiguity is removed and the timing and angle errors are reduced.

An even better embodiment of the procedure for the spatial configuration is to introduce the vertical elevation and the horizontal azimuth angles as variables in the least square method using all the correlated signals.

By using the rate of change of the angles the relative motion or velocity vector can be calculated, which is a uniform motion for passing aeroplanes, for example. The relative motion is used to update the relative position and to calculate, using this relative position, both angles for the next measurement cycle. The variance of the measurements determines the gain or weighting of the history. Actually, this sequence of steps is well described by the term Kalman Filtering. In this application of the Kalman Filtering, the phases of the correlated acoustic signals are used as input data, and the equation of uniform motion is used as the model. This type of filtering is optimal towards the accuracy of the relative position of the source and thus towards the sound measurement. Relative means in this context that two of the three parameters describing the motion relate to the third parameter. For example, the flight hight of an aeroplane is most likely to be taken as the third parameter.

An even better embodiment is to omit the angles and calculate directly from the input data the relative position and motion of the source.

To start tracking a source, peaks in the correlation signals have to be related to each other by a coincidence filter so that it corresponds with both angles, within an error depending on the variability of the environment. This relation is a function of time delay between the different signals and the strength of the signals.

By combining two configurations on a large base, the range is obtained from these measurements with an error, depending on the atmospheric conditions and even more so on the distance between the source and the phone configurations and its phone base.

As mentioned above, the method is specifically suited for signals having a large bandwidth. The noise of aeroplanes, for example, is a source of sound which is very well suited for analysis using the method and apparatus of the present invention.

Using more apparatus as described, the distance of the sources can be determined. It is also possible to determine the position of a certain object in rest producing sound using the apparatus or method according to the present invention, mounted on a moving vehicle. If the position and speed of the vehicle are known, for example using GPS, Global positioning system, the exact location of a certain sound producing object can be determined. It is also possible to determine the exact position of the vehicle using a source having a known position.

In case all data are related to position of the vehicle as parameter a technique can be applied more or less equivalent with the technique well known under the name synthetic aperture. Disturbing factors like the sound velocity and wind velocity can easily be estimated by modifying the time differences between the signals received by the different microphones due to the windvector, soundvelocity and position relative to the microphone configuration.

The method and apparatus described above relating to acoustic signals can also be applied to signals travelling through the air.

The various aspects of the invention will now be further explained with reference to the following figures showing specific embodiments of the invention, in which:

Fig. 1  shows a flow chart of the method and the apparatus according to the invention;

Fig. 2A  represents a possible wave shape of a received signal;

Fig. 2B  represents a frequency spectrum of this wave shape;

Fig. 3  represents a block diagram of a possible embodiment of an apparatus for measuring the sound and location of objects;

Fig. 4A  presents a schematic diagram of the set-up for measuring sound properties using two phones;

Fig. 4B  presents a schematic diagram of the set-up for measuring sound properties using three phones;

Fig. 4C  presents a schematic diagram of the set-up for measuring sound properties using four phones;

Fig. 5  shows a more detailed diagram according to elucidating component 60 of figures 4A, B and C;

Fig. 6  presents a more detailed scheme of part 100 of figure 5;

Fig. 7  presents a more detailed flow chart of part 120 and 140 of figure 5;

Fig. 8  Presents a flow chart of an alternative embodiment of the data processor;

Fig. 8A  Presents a detailed flow chart of part 170 of figure 8;

Fig. 8B  Presents a detailed flow chart of part 171 of figure 8B;

Fig. 9  presents an example of measurements of moving sound producing object;

Fig. 10  presents an example of measurements of moving sound producing object.

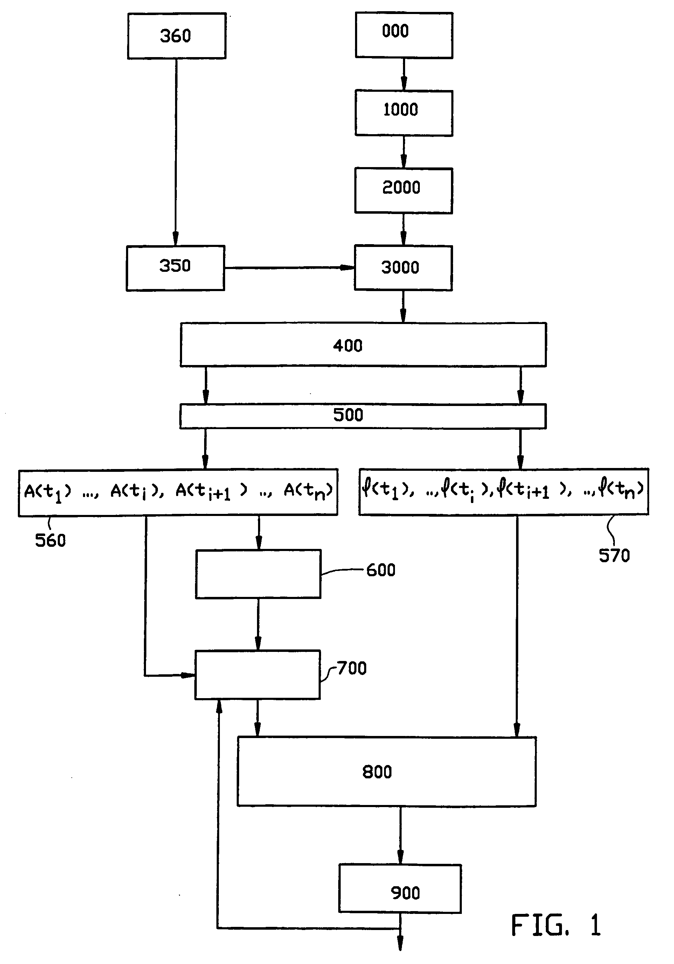

Fig. 1 shows a generalised, possible flow chart of the method and apparatus. A signal is detected by a first transducer 000 and converted into an electric signal. The electric signal is further processed by circuitry 1000. The circuitry 1000 is connected to an analog-to-digital converter (ADC) 2000. The ADC 2000 converts the electric signal into a digital signal. If crosstalk or background noise removal circuitry is added, the signal is fed to a subtracter 3000 to subtract this crosstalk or background noise 360 in crosstalk memory 350 from the digital signal. The digital signal without crosstalk is subsequently fed to a digital filter 400, which converts the digital signal into a complex digital signal. This filter can be a combination of Fourier transforms or Fast Fourier Transforms (FFT). Preferably, a Hilbert filter is used. The Hilbert filter converts a flow of single digital measurements into a flow of complex digital measurements with half the sample rate, in a manner known in the art. The complex digital signal is subsequently supplied to converter 500. The converter converts the complex digital signal to a digital amplitude signal and a digital phase signal. This conversion as such is well known in the art. If the complex digital signal is for example represented by a series:

$$s\ (t_1,\ \dots\ ,\ t_n)$$

then converter 500 produces from this the digital amplitude signal and the digital phase signal:

$$A(t_1,\ \dots\ ,\ t_n)\ \text{and}\ \phi(t_1,\ \dots\ ,\ t_n)$$

The digital amplitude is stored in amplitude memory 560; the digital phase is stored in phase memory 570. The digital amplitude signal is supplied to a procedure for averaging the amplitude 600 in such a way that the history of the amplitude is taken into account, using for example a so-called Infinite Impulse Response (IIR) filter like the analog equivalent, an RC filter, or other means known in the art. The amplitude signal and the history averaged amplitude signal and peak position of a previous peak are supplied to peak labelling procedure 700. In this peak labelling procedure a rough estimate of the peak position is estimated. The linearised phase data is unwrapped in order to remove the $2\pi$ ambiguity resulting in datapoints on a continuous curve, and using a linear least squares method 800 a straight line is fitted through these phase data. In this least squares fit, the arrival time of the pulse is determined from the abscissa, the average frequency of the signal is calculated from the tangent, and the noise is determined from $X^2$ (chi-square). This average frequency and arrival time of the detected pulse are calculated in 900. It is clear to a man skilled in the art that it might also be possible to perform a least squares fit, linear or non-linear, to an curve or function other than a straight line. It is preferred, however, to first convert the data to a smooth function, preferably a straight line, and then perform a least squares fit to fit the data points to a smooth function.

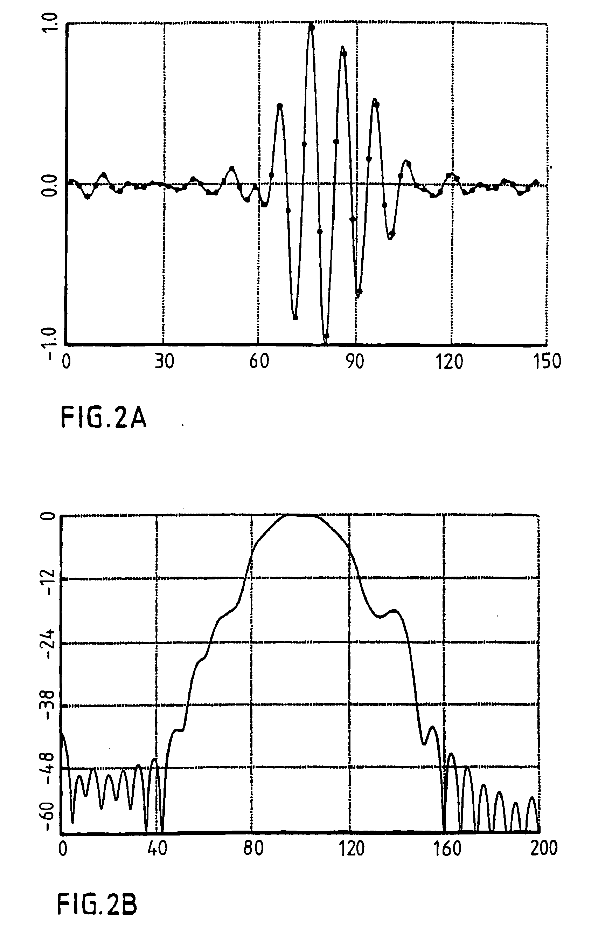

Fig. 2A shows a possible wave shape of a received signal in the time domain. Usually a very short, unipolar electric signal is applied to the transmitting second transducer, comparable to a Dirac-pulse in response to which the transducer outputs a short, damped vibration. The frequency of the vibration is thereby determined by the resonance frequency of the transducer while the length of the signal is substantially determined by the internal damping of the transducer, coupling of the medium, and the frequency dependant damping caused by the medium in which the signal is transmitted, for example air, the object, in case the method of the invention is used for measurements above in the air. The receiving transducer is also set responding; for example vibrating upon the reception of one or more reflected signals, and then outputs an electric signal as shown. In Fig. 2A the signal-to-noise ratio is about 20 dB; consequently it is a strong signal. In an apparatus according to the invention, signals with a far smaller signal-to-noise ratio may be processed. In Fig. 2A the horizontal scale is in microseconds, the measured values have been sampled with a frequency of 400 Kc/s. The vertical scale only shows a ratio with respect to the maximum signal.

Fig. 2B shows the spectrum of the received signal as shown in Fig. 2A in the frequency domain. The horizontal scale is in Kc/s, the vertical scale in dB. It clearly shows that the signal is a wide band signal.

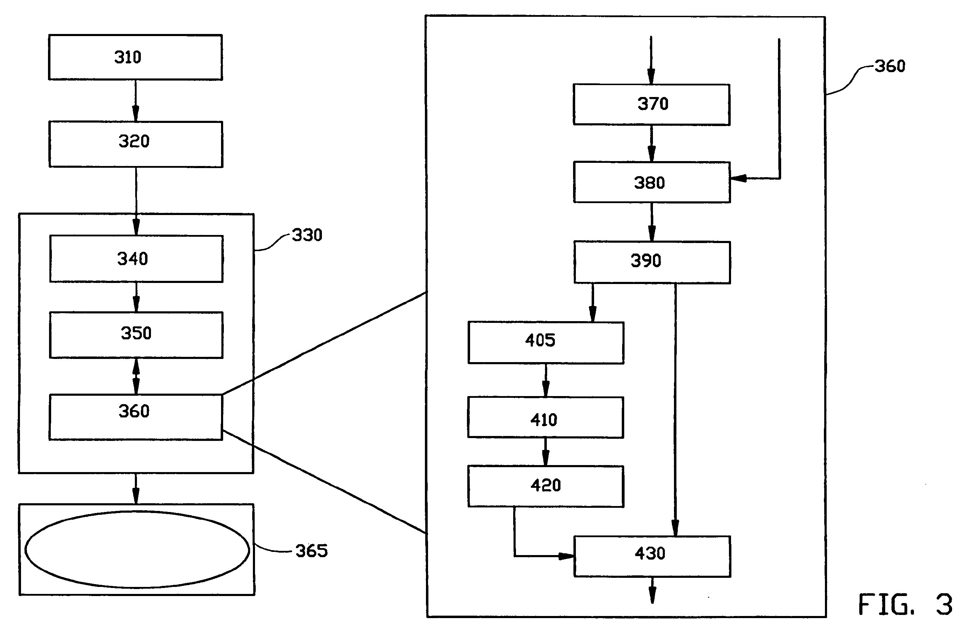

Fig. 3 represents a block diagram of a possible embodiment of apparatus according to the present invention. As shown, the transducer 310 is connected to receiver means 320, comprising a preamplifier and a bandpass filter. The receiver means 320 is connected to a computer 330 comprising an analog-to-digital converter 340, memory means 350 and software 360. The computer 330 is further connected to well known input, output and storage devices like for example a display 365. The digital signal is stored in the memory means 350 and led to the software 360 where it is processed using a Hilbert filter subroutine. The Hilbert filter converts a flow of single digital measurements into a flow of complex digital measurements with half the sample rate, in a manner known in the art. This data is also stored in the memory means 350.

The software will be further elucidated. The digital signals, representing the received electric signals, are directed to a Hilbert filter routine 370, supplied to a subtracter 380 in which, if desired, a crosstalk or background signal, is removed from the complex digital signal. The crosstalk can also be subtracted in the time domain, or before the Hilbert-filter step.

Before the actual measurement of the physical parameter is started, crosstalk signals are determined and stored in a crosstalk memory 350. This is for example easily effected by measuring in a direction wherein no variation of the signal, due to the physical parameter to be measured, is present. It is also possible to determine the crosstalk signal by measuring a number of signals under different circumstances and by averaging the complex digital signals, in which averaging process a changing component in these complex digital signals disappears and the crosstalk signal is retained. Once the crosstalk signal is known, it may simply be subtracted from the complex digital signal in subtracter 380 for obtaining a substantially crosstalk free complex digital signal.

The crosstalk-free complex digital signal thus obtained is subsequently supplied to a converter 390, arranged for converting this signal to a digital amplitude signal and a digital phase signal, which conversion as such is well known in the art and described above.

The digital amplitude signal is supplied for further processing to an amplitude memory 405 in which a filtered digital amplitude signal, obtained from preceding measurements, is stored. The digital amplitude signal is supplied to an amplitude filter 410 together with a digital amplitude signal. Amplitude filter 410 determines a new filtered digital amplitude signal from $\alpha$ times the filtered digital amplitude signal and $(1-\alpha)$ times the digital amplitude signal, with $\alpha = 0.6-0.95$.

The new filtered amplitude signal and the maximum in the new filtered amplitude signal are then supplied to weighting means 420, which determines a weighting factor. The digital phase signal is processed by applying a weighted least square method 430. According to this method, a line is fitted through the successive unwrapped phases of the digital phase signal, in which process the new estimated average frequency determines the direction of the line and the new filtered amplitude signal supplies the weighting factors, because the phase information emanating from a small measured value is relatively unreliable. Finally a physical parameter within the signal is determined from the zero crossing of the estimated phase history that is nearest to the maximum of the new filtered amplitude signal.

If the signal-to-noise ratio becomes very small, the weighting means 420 could incidentally point to a faulty zero crossing in the estimated phase history, causing a step-like change in the physical parameter as determined. In order to prevent this, a filter is added. The value of the parameter as measured is supplied to this filter. This value is then compared with values from other transducers. If there is a step-difference between these transducers, history of the parameters is taken into account to determine which values are most likely, and if this happens more then a specific number of times, then this type of filtering is not applied and a possible faulty condition is prevented. After an other specific number of times continued correspondence between parameter values, obtained from the data from all transducers, the filter is again used. If there is just one transducer present, stepwise changes are validated only by the amplitude history. This method and apparatus is preferably used with at least two transducers for receiving signals in order to track moving objects.

It is possible to improve the signal-to-noise ratio by arranging transmitter means 310 such that a relatively long, coded pulse is transmitted by the transmitting transducer, and by providing receiver means 320 with a correlator for the coded pulse. The correlation peak, as produced by the correlator, has substantially the same shape as the pulse shown in Fig. 2A, which implicates that the processing in fact can be used unchanged for the main lob. Between adjacent lobs 180 degree phase-jumps occur. Since the information content in the side lobs is much less, the information may be discarded otherwise, the 180 degree phase-jumps have to be removed in the unwrapping process of the phase data.

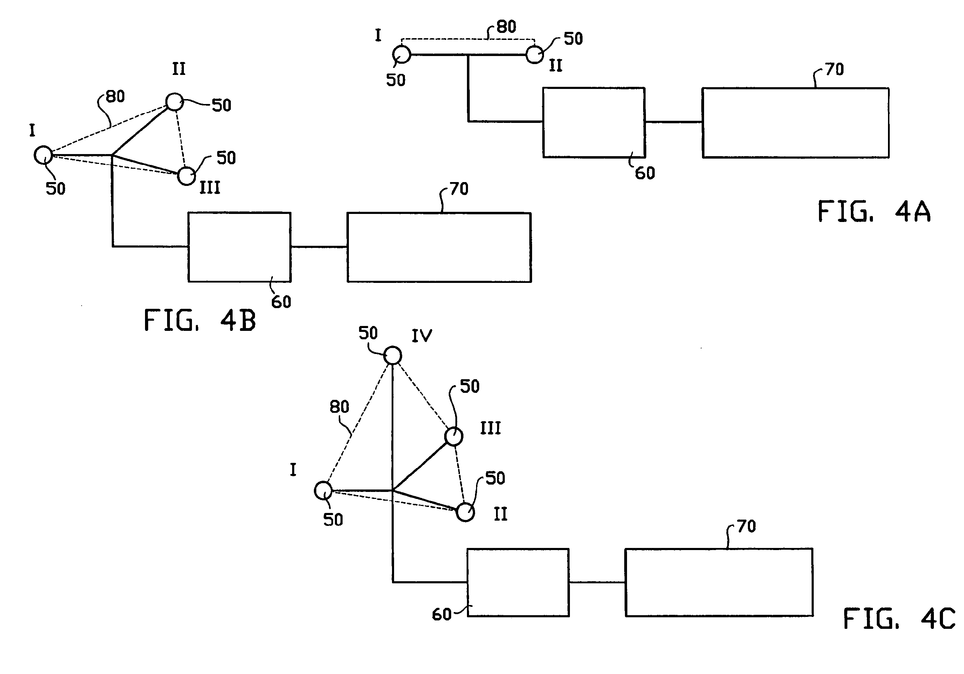

In figure 4A a set-up using two phones 50 is shown. The signals from the phones are directed to a data processor 60. Furthermore, parameters about the environment such as temperature of the air and humidity are fed from 70 into the data processor 60. Using two phones 50, information about the direction of the sources can be calculated. From these parameters other parameters such as the total amount of sound energy the source emits, etc. can be calculated. The distance 80 between the two phones 50 preferably is about 20 cm to 2 meter. The actual distance has to be accurately known. It is for example possible to determine the distance using a calibrated source.

In figure 4B the same set-up as in figure 4A is presented when using three phones 50. Using three phones 50 in, for example, a triangular setting with more or less equal distances between the phones 50, information can be obtained about the direction, but no information disclosing at which side of the plane defined by the three phones 50 a source is located.

In figure 4C a set-up similar to figures 4A and 4B is presented, using four phones 50. Using four phones 50 in, for example, a tetrahedron configuration with about the same distance 80 between each microphone, the direction of a source can be calculated. From this information, other parameters can be calculated.

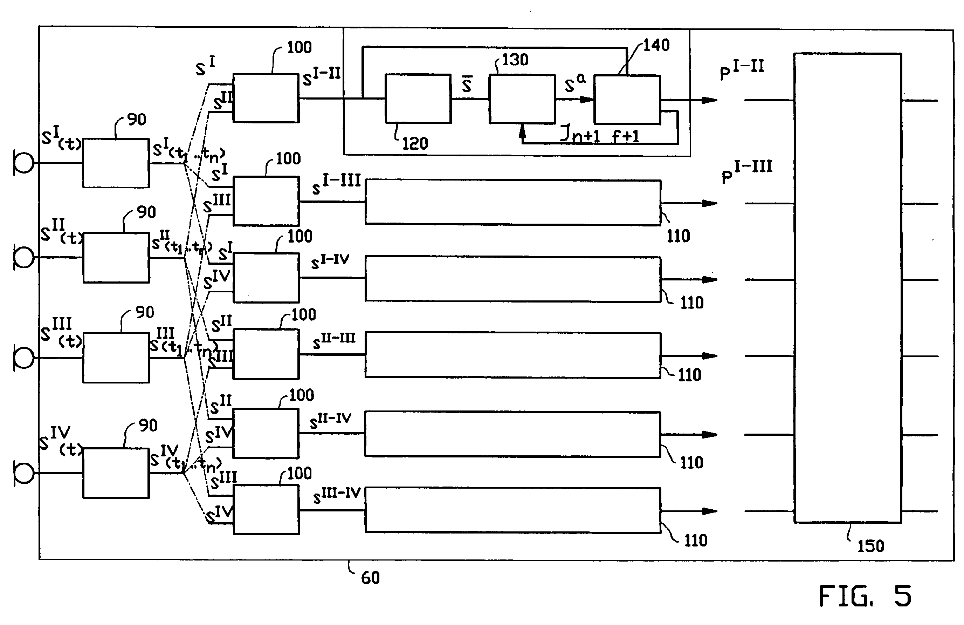

In figure 5 the data processor 60 of figures 4A-4C is elucidated, for four phones. The electric signals S enter the data processor 60 at circuitry 90 comprising a pre-amplifier and ADC. The four digital signals are input into six correlators 100 where each signal is correlated with each one of the other signals. Thus, four input signals result in 6 correlated signals. These correlated signals are each input a separate source detector/tracker circuitry 110. There, the arrival time and the time difference between each phone are calculated using source detector/tracker 110. Each of the six correlated signals enters averager 120, which is connected to the input of detector/tracker 130. The output of detector/tracker 130 is connected to tracking filter 140. The input of the source detector/tracker is also connected to the input of tracking filter 140. The output from the tracking filter 140 is looped back to the input of detector/tracker 130.

The six signals output from the six source detector/tracker circuits are input into one coincidence filter 150. From the coincidence filter 150 several parameters 160 are obtained such as the sound level (dB) of the source, the sound level (dB) of the environment, the spectrum of the sound of the source, the spectrum of the sound of the environment and the direction of the source with respect to the detectors.

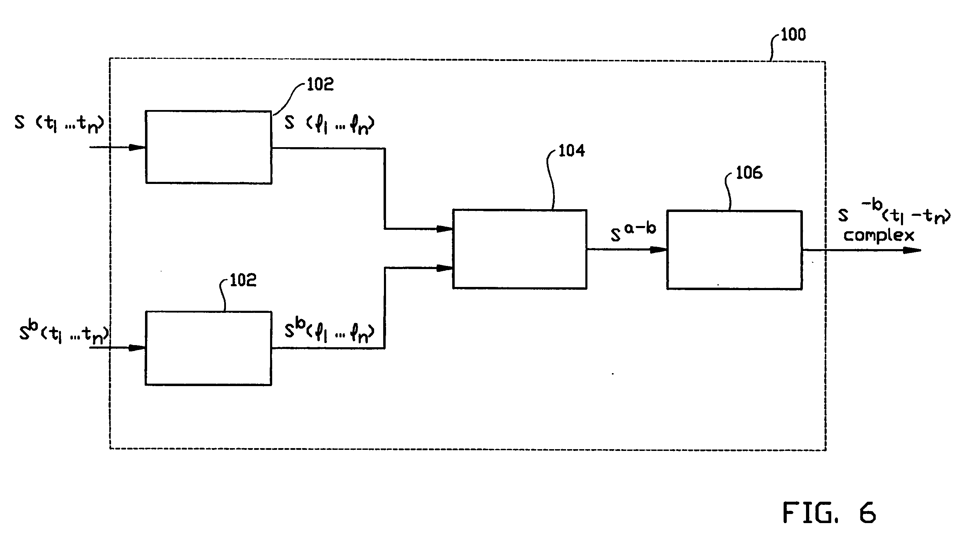

In figure 6 the circuitry of the correlator 100 is elucidated. Two signals from different phones enter real Fast Fourier Transforming (FFT) means 102. The two Fourier transformed signals are subsequently input into a correlator 104 where the two signals are combined. The output side of the correlator 104 is connected to the input side of a FFT means where the complex inverse FFT of the input signal is calculated. Thus, the signal is converted into a complex signal.

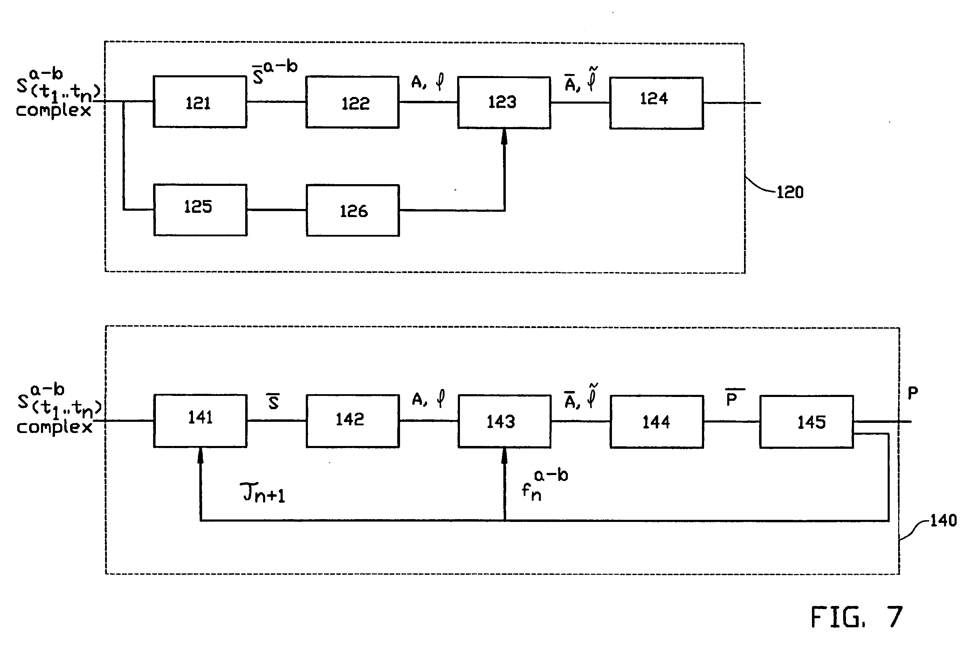

In figure 7 the averager 120 and the tracking filter 140 of figure 6 are further elucidated. The correlated signal from correlator 100 is input in averager 120. The input is connected to averager 121 and envelope averager 125. The averager 121 is connected to a converter, which converts the complex signal into an amplitude signal and a phase signal. The phase data and amplitude information is input in a phase unwrapper 123. The envelope averager 125 is further connected to peak detector 126 which is connected to phase unwrapper 123. The phase unwrapper 123 is connected to least squares estimator 124.

The correlated signal from correlator 100 and the output from detector/tracker 130 are input to tracking filter 140. The input of tracking filter 140 is input in tracking filter 141, the output of tracking filter 141 is input in converter 142 which converts the complex signal into an amplitude signal and a phase signal. The phase and amplitude data from converter 142 are input to phase unwrapper 143. The unwrapped phase data and amplitude history is input to least squares estimator 144 where time delay, frequency and strength are calculated. The result from least squares estimator 144 is input to source motion analyzer 145. The output from the source motion analyzer is also coupled back to tracking filter 141 and unwrapper 143.

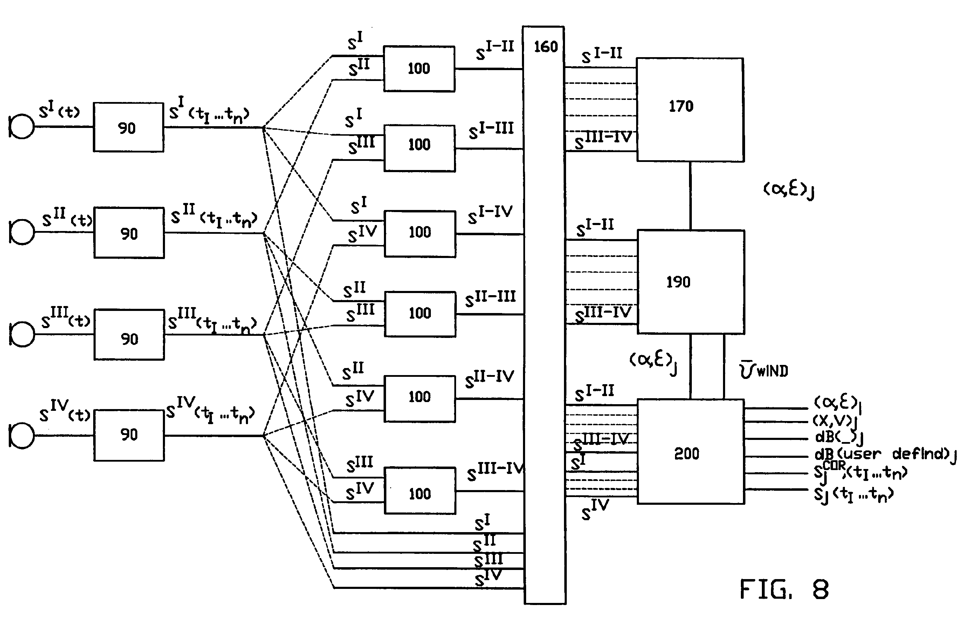

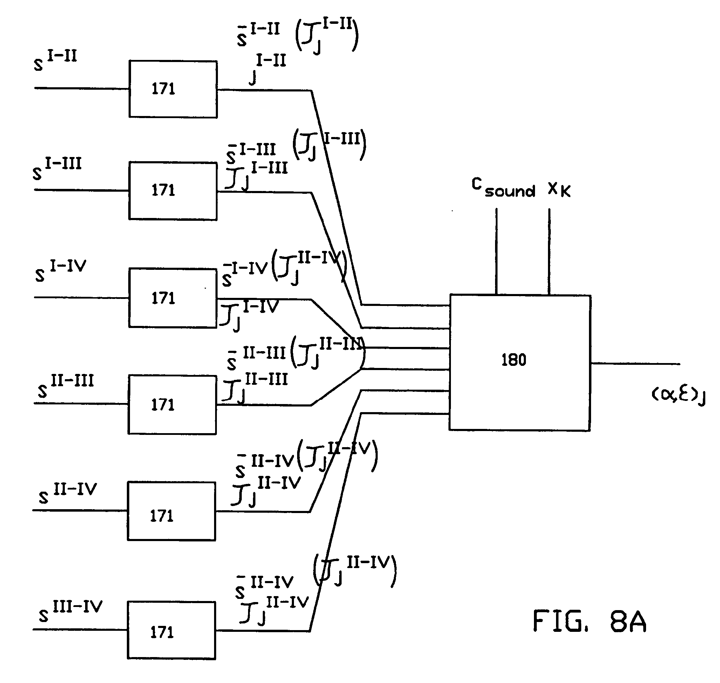

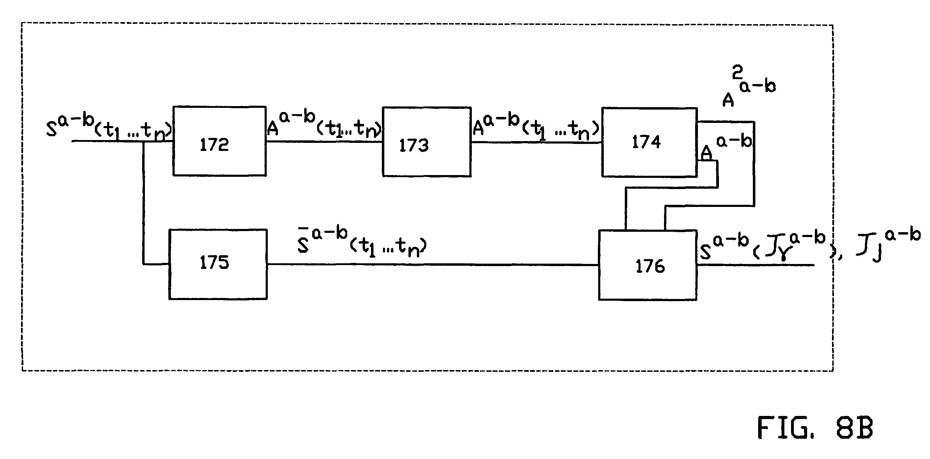

In figure 8, an alternative embodiment of the invention is shown, resulting in even better tracking of sound sources. The signals are conditioned and correlated as in figure 7. The source detector locates peaks in all correlation signals taking into account correlation peaks of already detected sources.

Peaks are found by averaging the envelopes obtained from the complex correlation signal. From the averaged envelope signal the mean and variance is obtained. The peaks are found as those above a certain value defined by the mean and the variance of the envelope and the bandwidth of the correlation signal.

The coincidence filter calculates the square error of possible azimuth and elevation angles $(\alpha,\varepsilon)_j$ of source j. There are a limited possible directions for time delays $\tau^{a-b}_j$. The correct direction and combination has the lowest square error. These angles are used for source tracking.

The source tracker uses a steady state model for the motion of the plane. It predicts the angles of source j from the previous time and the history of the relative coordinates. From the complex correlation the envelope $A^{a-b}_k$ and the unwrapped phases $\phi^{a-b}_k$ are calculated taking into account the time delays. These phases are used to calculate by a least square method the updates in angles and relative coordinates, motion of the source and the auxiliary phase rate parameter omega, which is equivalent with the mean frequency of the correlated radial frequency. Since the strength can vary 20 dB due to ground reaction, different weighting schemes can be applied to reduce these effects. By optimizing the filtering the Kalman filter on angles/relative positions is obtained using the phase signals. It should be noted that the Kalman filter is known per se from, for example, "Modern Control Theory", William T. Brogran, Prentice-Hall, 1974.

The sound velocity in air, a function of temperature and humidity, is supplied by a subsystem. The windvector, which manifests itself in the propagation of sound by changing the arrival times of the signals at the different transducers, can be determined by measuring directly or as auxiliary parameters of the least squares method. Since the sound velocity changes very slowly the sound velocity (scalar) may also be obtained via the least square method. A constraint is that the number of directions should be present in the data of a substantial time interval otherwise a singularity may occur due to the dependency of sound propagation vectors and wind velocity vectors. In case the errors are too large, the tracking is lost.

In the source data extractor the source is parametrized according to the user specifications. For example, the angles are used to obtain the correct sound intensity of the source expressed in units like dB(A) or user defined units. Beamforming can be applied to obtain, from all phones used in the source detector and sound tracker, highly directional sound data. Due to the known coordinates of the source a limited number of calculations has to be made to obtain an acoustical time record of the source via the beamformer.

The following components are depicted in figure 8. The electric signals S(t) enter the data processor 60 of figure 4A-4C at circuitry 90 comprising a pre-amplifier and ADC. The four digital signals are input into six correlators 100 where each signal is correlated with one of the other signals. The signals are convoluted through a real Fourier transform and transformed back using a complex inverse Fourier transform, resulting in a complex signal $S^{x-y}$ (x = I, II, III, y = II, III, IV). Thus, four input signals result in 6 correlated complex signals. The correlator is already explained in figure 5. The correlated signals and the original signals are input in a data bus means or memory means 160. From the memory or data bus means 160 the signals are input in a source detector 170, a source tracker 190 and a source extractor 200.

The source detector 170 is further elucidated in figure 8A and 8B. In the source detector 170 and source tracker 190 the arrival time and the time difference between each phone are calculated. In the source data extractor 200, finally, the physical parameters, in this case the relative position x and y relative to the height in case of aeroplanes, strength of the source in dB(A) and the wind vector in the horizontal plane in m/s are determined in the least square method in 190.

In figure 8A, the source detector is further elucidated. The correlated complex signals S are entered into peak detector 171. This peak detector is equivalent to the peak detector described in figure 7. From the peak detector 171 the time differences $\tau$ and the mean amplitudes of the correlation signal at time differences $\tau$ are entered into the coincidence filter 180. The coincidence filter equals the coincidence filter described in figure 5.

In figure 8B, the peak detector 171 is further explained. The signal S is directed to transformation means 172 for transforming the complex correlated signals into amplitude and phase signals. The signal S is also input into history means 175, where a predetermined amount of signal history is added to the current signal.

From the transformation means 172 the amplitude and phase signals are input into a history filter 173, where a predetermined amount of history is added to the current signal. The signal is from history means 173 input into an average variance calculator 174. From average variance calculator 174 the signals are input into peak allocator 176. Into the peak allocator, also the signals with history from history means 175 is input. From the peak allocator, the signals with added history and the time differences between two microphones, τ is output.

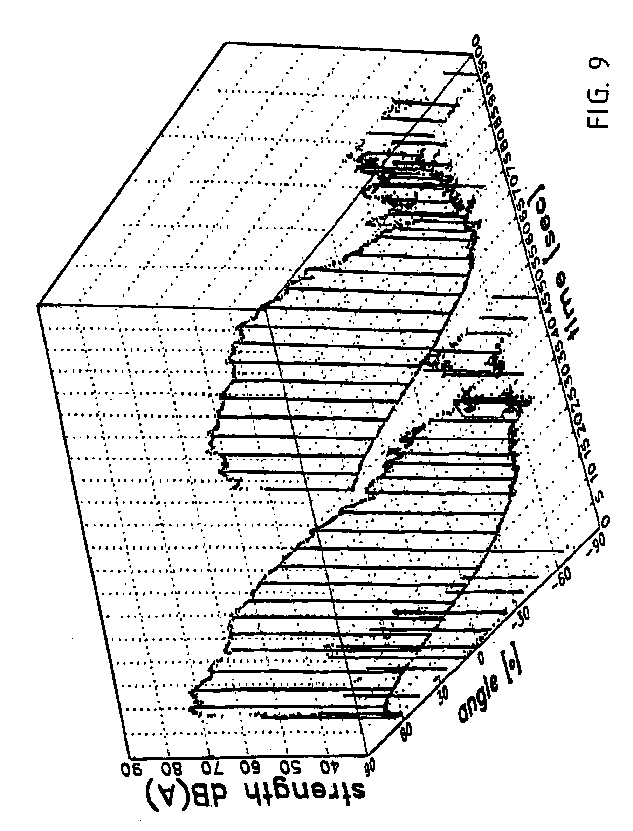

In figure 9, a three dimensional plot is presented of measurements of two moving objects, i.e. two twin-engined jets. The y-axis represents the angle in the horizontal plane with regard to the measuring system. From the plot it is clear that the position of the jets can be followed very accurately.

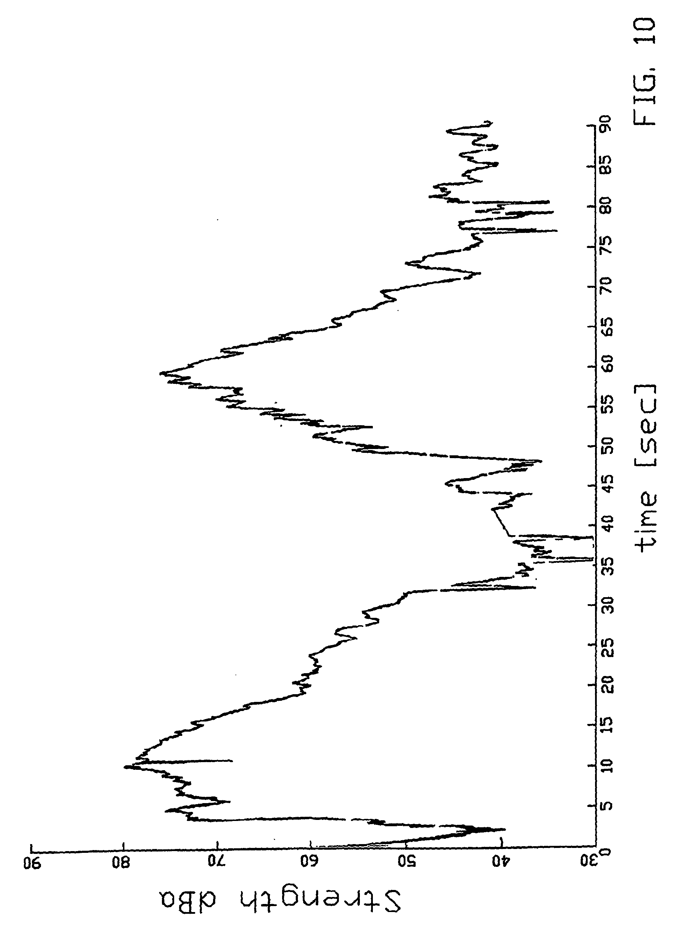

In figure 10, a plot is presented showing the intensity of the sound of the moving objects of figure 8 as function of time. The second source in the time interval 50-70 s is a Learjet. The plot shows that using the measuring system according to the invention for measuring sound properties, the sound intensity of moving objects as well as the direction of the objects with regard to the measuring system can be accurately determined.

**Claims**

1. Method for extracting at least one physical parameter, not being a physical parameter of a fluid-flow in a pipe, from at least one first time-based acoustic signal, where the time-based acoustic signal is received by at least two transducers (000, 50, 310), not being transducers fixed on or into a pipe, which are located above a water surface or above land, the time-based acoustic signal is converted into an electric time-based signal (5), and the electric time-based signal (5) is applied to a signal processor, in which signal processor the electric time-based signal (5) is converted by an analog-to-digital converter into at least one first time-based digital signal, **characterised in that** the time-based digital signal is transformed into a complex time-based digital signal, and the at least one physical parameter is determined on the basis of a time-based phase history and a time-based amplitude history of the complex time-based digital signal.

2. Method according to claim 1, **characterised in that** the digital time-based signal is transformed into a complex time-based digital signal by a Hilbert filter (370) or by a real Fourier transformation (102) followed by a complex inverse Fourier transformation.

3. Method of claim 1 or 2, **characterised in that** the signal processor transforms the complex time-based digital signal into a digital time-based amplitude signal (A) and a corresponding digital time-based phase signal (φ).

4. Method according to any of the preceding claims, **characterised in that** the digital signal processor comprises an amplitude memory (560), in which a filtered digital time-based amplitude signal as obtained from previous measurements is stored, and that every time a new filtered digital time-based amplitude signal is determined from the digital time-based amplitude signal and from the stored filtered digital time-based amplitude signal.

5. Method according to claim 4, **characterised in that** the digital signal processor comprises a frequency memory, in which an estimated average frequency of the signal, obtained from previously obtained digital time-based phase signals, is stored.

6. Method according to claim 5, **characterised in that** using the weighted least squares method (800, 430, 124, 144) a time-based phase history is estimated from the estimated frequency and from the digital time-based phase signal.

7. Method according to claim 6, **characterised in that** the filtered digital time-based amplitude signal supplies the weighting factors.

8. Method according to claim 7, **characterised in that** the physical parameter is determined based on a zero crossing in the estimated time-based phase history that is closest to a maximum in the filtered digital time-based amplitude signal.

9. Method according to any of the preceding claims, **characterised in that** a crosstalk signal not comprising a physical parameter to be measured is subtracted from the time-based signal, digital time-based signal or complex digital time-based signal before the complex digital time-based signal is further processed.

10. Method according to any of the preceding claims, **characterised in that** signals from the at least two different transducers (50) are correlated in such a way that the time-based signal of each transducer (50) is correlated with each one of the other time-based signals, resulting in correlation of all different combinations of two time-based signals.

11. Method according to any of the preceding claims, **characterised in that** the history is taken into account through the physical model used.

12. Method according to any of the preceding claims, **characterised in that** the proportion of the variance of a current measurement and the variance of previous measurements determine the history to be taken into account.

13. Method according to any of the preceding claims, **characterised in that** the measured data is unwrapped in order to remove discontinuities.

14. Method according to claim 10 or any of the preceding claims 11-13 when depending on claim 10, **characterised in that** all correlated signals from all the transducers (50) are input in a single optimisation procedure, preferably a least squares procedure (430).

15. Method according to any of the preceding claims, **characterised in that** parameter of motion analysis and/or directional information and/or distance of a source is calculated.

16. Method according to any of the preceding claims, **characterised in that** physical parameters of moving objects located above a water surface or above land are measured.

17. Use of the method according to any of the preceding claims 1-16 for determining the motion and strength of sound of moving objects above a water surface or above land.

18. Apparatus for extracting at least one physical parameter, not being a physical parameter of a fluid-flow in a pipe, from a time-based acoustic signal, comprising at least two transducers (000, 50, 310), not being transducers fixed on or into a pipe, located above a water surface or above land for converting the time-based acoustic signal into an electric signal (5), a signal processor and a digital signal processor, connected to the transducers (000, 50, 310) and provided with an analog-to-digital converter (2000, 340, 90), **characterised in that** the digital signal processor is provided with a means for deriving a first complex time-based digital signal (400, 360, 370), a converter means (500, 390, 142) connected to the means for deriving a first complex time-based digital signal for converting the complex time-based digital signal into a time-based amplitude signal (A) and a time-based phase signal ($\varphi$), an amplitude memory (560, 405) connected to the converter means for storing the time-based amplitude signal and a phase memory means (570) for storing the time-based phase signal, and means for determining the at least one physical parameter on the basis of a time-based phase history and a time-based amplitude history of the complex time-based digital signal.

19. Apparatus according to claim 18, **characterised in that** means for deriving a first complex digital time-based signal comprises a Hilbert filter (370) or a filter comprising a real Fourier transform (102) and a complex inverse Fourier transform.

20. Apparatus according to claim 18 or 19, **characterised in that** the digital signal processor is arranged for converting a first complex digital time-based signal into a digital time-based amplitude signal and a corresponding digital time-based phase signal.

21. Apparatus according to claim 20, **characterised in that** the digital signal processor is provided with an amplitude memory, for storing a filtered digital time-based amplitude signal, derived from previous measurements, and a frequency memory, for storing an estimated average frequency, derived from digital time-based phase signals from previous measurements.

22. Apparatus according to claim 21, **characterised in that** the digital signal processor is provided with filter means for deriving a new filtered digital time-based amplitude signal from a digital time-based amplitude signal and a filtered digital time-based amplitude signal stored in the amplitude memory and for deriving a new average frequency of the received time-based signal from a digital time-based phase signal and from an average frequency stored in the frequency memory.

23. Apparatus according to claim 22, **characterised in that** the digital signal processor is provided with weighting means, for estimating a time-based phase history using a weighted least square method, from the estimated frequency of the signal and the series of time-based phase estimations, where the filtered digital time-based amplitude signal provides the weighting factors.

24. Apparatus according to any of the preceding claims 18-23, **characterised in that** the digital signal processor is arranged for deriving physical parameters from the signal from the time-based phase history.

25. Apparatus according to any of the preceding claims 18-24, **characterised in that** the digital signal processor is moreover provided with a crosstalk memory for storing a crosstalk representing second complex time-based digital signal, derived from received complex time-based digital signals, and with a subtractor, for subtracting the second complex digital time-based signal from a first complex digital time-based signal before this first complex digital time-based signal is further processed.

**26.** Vehicle with means for propagation or movement equipped for measuring physical parameters of objects moving above a water surface or above land comprising an apparatus according to any one of the preceding claims 18-25.

**27.** The apparatus of claims 18-25 comprising a computer loaded with a software program comprising code means adapted for performing the following steps when said program is run on the computer:

- converting time-based digital signals into complex time-based digital signals,
- converting the complex time-based digital signals into digital time-based phase signals and digital time-based amplitude signals,
- storing the digital time-based phase signals into phase memory means,
- storing the digital time-based amplitude signals into amplitude memory means,
- finding a first estimate of the maximum amplitude of the current time-based amplitude signal using previous time-based amplitude data,
- linearising the digital time-based phase data as function of the associated time base using the first estimate of the maximum amplitude,
- calculating the tangent and abscissa of the phase data as a function of the associated time basis.
- calculating a physical parameter using the tangent, the abscissa and a previously calculated physical parameter.

**Patentansprüche**

**1.** Verfahren zum Extrahieren mindestens einem physikalischen Parameter, der nicht ein physikalische Parameter von Flüssigkeit-Strom in ein Rohr ist, von mindestens einem zuerst Zeit-gegründeten akustischen Signal wo das Zeit-gegründete akustische Signal wird empfangen von mindestens zwei Signalumformer (000, 50, 310) örtlich nicht festgelegt auf oder in ein Rohr die über einer Wasseroberfläche oder über Land sich befinden, wird das Zeit-gegründete akustische Signal umgewandelt in ein elektrische Zeit-gegründete Signal (5) und das elektrische Zeit-gegründete Signal (5) wird an einem Signalprozessor angewendet, in dem Signalprozessor wird das elektrische Zeit-gegründete Signal (5) umgewandelt durch einen Analog-Digitalkonverter in mindestens ein zuerst Zeit-gegründete digitale Signal, **dadurch gekennzeichnet daß** das Zeit-gegründete digitale Signal in ein komplex Zeit-gegründete digitale Signal umgewandelt wird und mindestens ein physikalischer Parameter auf der Grundlage von einer Zeit-gegründeten Phase Geschichte und einer Zeit-gegründeten Amplitude Geschichte vom komplexen Zeit-gegründeten digitalen Signal festgestellt wird.

**2.** Verfahren nach Anspruch 1 **dadurch gekennzeichnet daß** das digitale Zeit-gegründete Signal wird umgewandelt in einem komplexen Zeit-gegründeten digitalen Signal von einen Hilbert Filter (370) oder von einem realen Fouriertransformation (102) gefolgt von einem komplexen umgekehrten Fouriertransformation.

**3.** Verfahren nach Anspruch 1 oder 2, **dadurch gekennzeichnet daß** der Signalprozessor das komplexe Zeit-gegründete digitales Signal in ein digitale Zeit-gegründete Amplitude-Signal (A) und in einem entsprechenden digitalen Zeit-gegründeten Phase-Signal ($\varphi$) umwandelt.

**4.** Verfahren nach einem der vorgehenden Ansprüche, **dadurch gekennzeichnet daß** der Prozessor des digitalen Signal ein Amplitude Datenspeicher (560) umfaßt, in dem ein gefiltertes digitales Zeit-gegründetes Amplitude-Signal, wie von vorhergehendem erreichten Messungen, wird gespeichert, und das jedes mal, wenn ein neues gefiltertes digitales Zeit-gegründetes Amplitude-Signal wird festgestellt von digitalen Zeit-gegründeten Amplitude-Signal und von dem gespeicherten gefilterten digitalen Zeit-gegründete Amplitude-Signal.

**5.** Verfahren nach Anspruch 4 **dadurch gekennzeichnet daß** der digitale Signal Prozessor ein Frequenz-Datenspeicher enthält, in welchen ein geschätzter durchschnittlicher Frequenz des Signal, erreicht von vorher erhaltenen digitalen Zeit-gegründeten Phase Signal, wird gespeichert.

**6.** Verfahren nach Anspruch 5 **dadurch gekennzeichnet daß** durch Verwendung von dem gewiegten kleinsten Quadratmethode (800, 430, 124, 144) eine Zeit-gegründete Phase Geschichte von dem geschätzten Frequenz und vom digitalen Zeit-gegründeten Phase Signal geschätzt wird.

**7.** Verfahren nach Anspruch 5 **dadurch gekennzeichnet daß** das gefilterte digitale Zeit-gegründete Amplitude-Signal die wiegenden Faktoren liefert.

**8.** Verfahren nach Anspruch 7 **dadurch gekennzeichnet daß** der physikalische Parameter wird festgestellt auf der Grundlage einer Null-kreuzung in der geschätzten Zeit-gegründeten Phase Geschichte, die zu einem Maximum im gefilterten digitalen Zeit-gegründeten Amplitude-Signal am nächsten ist.

**9.** Verfahren nach einem der vorgehenden Ansprüche, **dadurch gekennzeichnet daß** ein Übersprech-Signal, das nicht einen physikalischen, zu messen Parameter enthält, vom Zeit-gegründeten Signal, digitalen Zeit-gegründeten Signal oder von komplexen digitalen Zeit-gegründeten Signal subtrahiert wird zuvor das komplexe digitale Zeit-gegründete Signal wird weiter verarbeitet.

10. Verfahren nach einem der vorgehenden Ansprüche, **dadurch gekennzeichnet daß** Signalen von dem mindestens zwei unterschiedlichen Signalumformer (50) miteinander korreliert werden, so daß das Zeit-gegründete Signal jedes Signalumformers (50) mit jedem einem vom anderen Zeit-gegründeten Signal wird korreliert, mit dem Ergebnis der Wechselbeziehung aller unterschiedlichen Kombinationen von zwei Zeit-gegründeten Signalen.

11. Verfahren nach einem der vorgehenden Ansprüche, **dadurch gekennzeichnet daß** die Geschichte durch das physikalische benutzte Modell in Betracht gezogen wird.

12. Verfahren nach einem der vorgehenden Ansprüche, **dadurch gekennzeichnet daß** der Anteil der Abweichung von gegenwärtigen Messungen und der Abweichung von vorhergehenden Messungen die in Betracht zu nehmen Geschichte bestimmen.

13. Verfahren nach einem der vorgehenden Ansprüche, **dadurch gekennzeichnet daß** die gemessenen Daten entwirrt worden zum Auftrag die Entfernung von Diskontinuitäten.

14. Verfahren nach Anspruch 10 oder einem der vorgehenden Ansprüche 11-13 wenn abhängig von dem Anspruch 10, **dadurch gekennzeichnet daß** alle korrelierte Signale von allen Signalumformern (50) in einem einzelnen Optimierung Verfahren, vorzugsweise eingegeben kleinste Quadratverfahren (430) eingegeben werden.

15. Verfahren nach einem der vorgehenden Ansprüche, **dadurch gekennzeichnet daß** Parameter der Bewegung Analyse und/oder Richtungsinformationen und/oder Abstand einer Quelle errechnet werden.

16. Verfahren nach einem der vorgehenden Ansprüche, **dadurch gekennzeichnet daß** physikalische Parameters der beweglichen Gegenstände gefunden über einer Wasseroberfläche oder über Land gemessen werden.

17. Gebrauch des Verfahrens nach einem der vorgehenden Ansprüche 1-16 zum Bestimmung der Bewegung und den Stärke des Schalle von beweglichen Gegenständen über einer Wasseroberfläche oder über Land.

18. Apparat zum Extrahieren mindestens einem physikalischen Parameter, der nicht ein physikalische Parameter von Flüssigkeit-Strom in ein Rohr ist, von einem Zeit-gegründeten akustischen Signal und enthalten von mindestens zwei Signalumformer (000, 50, 310), gelegen über einem Wasser, nicht gleich ein Signalumformer geregelt auf oder in einem Rohr, Oberflächen- oder über Land für das Umwandeln das Zeit-gegründete akustische in einem elektrischen Signal (5), in einen Signalprozessor und einem Signalprozessor von digitalen Signals, angeschlossen an der Signalumformer (000, 50, 310) und vorausgesetzt mit einem Analog-Digitalkonverter (2000, 340, 90), **dadurch gekennzeichnet daß**, der Digitalsignalprozessor ist ausgerüstet mit einem Mittel für das Ableiten ein erste komplexe Zeit-gegründete digitale Signal (400, 360, 370), ein Konvertermittel (500, 390, 142) angeschlossen an die Mittel für das Ableiten ein erste komplex Zeit-gegründet digital Signal für das Umwandeln von dem komplexen Zeit-gründeten digitalen Signal in einem Zeit-gegründeten Amplitude-Signal (A) und einem Zeit-gegründeten Phase-Signal (φ), ein Amplitude Datenspeicher (560, 405) angeschlossen an dem Konvertermittel für die Speicherung des Zeit-gegründeten Amplitude-Signals und ein Mittel eines Phase Datenspeichers (570) für die Speicherung von Zeit-gegründeten Phase-Signal und Mittel für die Bestimmung mindestens einteilen physikalische Parameter auf der Grundlage von einer Zeit-gegründeten Phase Geschichte und einer Zeit-gegründeten Amplitude Geschichte von dem komplexen Zeit-gegründeten digitales Signal.

19. Apparat nach Anspruch 18, **dadurch gekennzeichnet daß**, die Mittel für das Ableiten eines ersten komplexen digitalen Zeit-gegründeten Signals einen Hilbert Filter (370) oder einen Filter enthaltend eine reale Fouriertransformation (102) und eine komplexe umgekehrte Fouriertransformation enthalten.

20. Apparat nach Anspruch 18 oder 19, **dadurch gekennzeichnet daß**, der Prozessor des digitalen Signals ist eingerichtet zum Konvertieren eines erste komplexe digitale Zeit-gegründete Signal in ein digitale Zeit-gegründete Amplitude-Signal und eine entsprechende digitale Zeit-gegründete Phase-Signal.

21. Apparat nach Anspruch 20, **dadurch gekennzeichnet daß**, der Prozessor des digitalen Signals mit einem Amplitude Datenspeicher, für die Speicherung eines gefilterten digitalen Zeit-gegründeten Amplitude-Signal, abgeleitet von den vorhergehenden Messungen, und mit einem Frequenz-Datenspeicher, für die Speicherung einer geschätzten durchschnittlichen Frequenz, abgeleitet von den digitalen Zeit-gegründeten Phase-Signalen von den vorhergehenden Messungen, versehen ist.

**22.** Apparat nach Anspruch 21, **dadurch gekennzeichnet daß** der Prozessor des digitalen Signals mit Filtermitteln für das Ableiten eines neuen gefilterten digitalen Zeit-gegründeten Amplitude-Signals von einem digitalen Zeit-gegründeten Amplitude-Signal und von einem gefilterten digitalen Zeit-gegründeten Amplitude-Signal versehen wird, speicherten im Amplitude-Datenspeicher und für das Ableiten eines neues durchschnittliche Frequenz des empfangenen Zeit-gegründeten Signal von einem digitalen Zeit-gegründeten Phase-Signal und von einer durchschnittlichen Frequenz gespeichert im Frequenzspeicher, versehen ist.

**23.** Apparat nach Anspruch 22, **dadurch gekennzeichnet daß** der Prozessor des digitalen Signal mit ein Mittel für wiegen versehen ist, für das Schätzen einer Zeit-gegründeten Phase Geschichte mit wiegenden kleinsten Quadratmethode, von dem geschätzten Frequenz des Signal und der Reihe der Zeit-gegründeten Phase Schätzungen, wo das gefilterte digitale Zeit-gegründete Amplitude-Signal die wiegende Faktoren liefert.

**24.** Apparat nach einem der vorgehenden Ansprüche 18-23, **dadurch gekennzeichnet daß** der Prozessor des digitalen Signals für das Ableiten der physikalischen Parameter vom Signal von der Zeit-gegründeten Phase Geschichte angeordnet ist.

**25.** Apparat nach einem der vorgehenden Ansprüche 18-24, **dadurch gekennzeichnet daß** der Prozessor des digitalen Signals außerdem mit einem Übersprech- Datenspeicher für die Speicherung eines Übersprech-Signale versehen ist, das ein zweiter Stelle komplexe Zeit-gegründete digitale Signal, abgeleitet von empfangenen komplexe Zeit-gegründeten digitalen Signalen und mit einem Subtraktor dargestellt, denn das zweite komplexe digitale Zeit-gegründete Signal von einem ersten komplexen digitalen Zeit-gegründeten Signal, welches subtrahiert, bevor dieses erste komplexe digitale Zeit-gegründete Signal weiter verarbeitet wird.

**26.** Träger mit Mitteln für Fortbewegung ausgerüstet für die Messung von physikalischen Parameter des Objekts die über eine Wasseroberfläche oder über das Land bewegen, enthältend einen Apparat nach einem der vorgehenden Ansprüche 18-25.

**27.** Apparat nach einem der Ansprüchen 18-25, enthaltend einen Computer geladen mit einem Software-Programm, welches die Codemittel enthält, die für das Durchführen der folgenden Schritte angepaßt wurden, wenn besagtes Programm auf den Computer laufen lassen wird:

- das Umwandeln Zeit-gründete digitale Signale in komplexe Zeit-gegründete digitale Signale,
- das Umwandeln des Komplexes Zeit-gründeten digitalen Signal in digitalen Zeit-gegründeten Phase-Signal und in digitalen Zeit-gegründeten Amplitude-Signale,
- die Speicherung des digitalen Zeit-gegründeten Phase-Signal in Phase Datenspeichermittel,
- die Speicherung des digitalen Zeit-gegründeten Amplitude-Signal in Amplitude Datenspeichermittel,
- das Finden einer ersten Schätzung des maximalen Amplitudes vom gegenwärtigen Zeit-gegründeten Amplitude-Signal, verwendet die vorhergehende Zeit-gründete Amplitude-Daten,
- die Linearisierung der digitalen Zeit-gegründeten Phase-Daten als Funktion der verbundenen Zeitunterseite mit der ersten Schätzung des maximalen Amplitudes,
- Berechnung der Tangente und der Abszisse der Phase Daten als Funktion der verbundenen Zeitgrundlage,
- Berechnung eines physikalischen Parameters mit der Tangente, der Abszisse und einem vorher errechneten physikalischen Parameter.

**Revendications**

**1.** Méthode pour extraire au moins un paramètre physique, n'étant pas un paramètre physique d'un courant liquide dans une pipe, d'au moins un premier signal acoustique basé sur la durée de temps, où le signal acoustique basé sur la durée de temps est reçu par au moins deux capteurs (000, 50, 310), n'étant pas un paramètre physique de d'un courant liquide dans une pipe, en n'étant pas fixé dessus ou dans une pipe, qui sont situés au-dessus d'une surface de l'eau ou au-dessus de la terre, le signal acoustique basé sur la durée de temps est converti en un signal basée sur la durée de temps électrique (5), et le signal basée sur la durée de temps électrique (5) est appliqué à un processeur de signal, dans lequel le signal basé sur la durée de temps électrique (5) est converti par un convertisseur analogique-numérique en au moins un premier signal numérique basé sur la durée de temps, **caractérisé en ce que** le signal numérique basé sur la durée de temps est transformé en un complexe signal numérique basé sur la durée de temps, et au moins un paramètre physique est déterminé sur la base d'une phase historique et d'une amplitude historique basée sur la durée de temps du complexe signal numérique basée sur la durée de temps.

**2.** Méthode selon la revendication 1, **caractérisée en ce que** le signal numérique basé sur la durée de temps est transformé en complexe signal numérique basé sur la durée de temps par un filtre de Hilbert (370) ou par une transformation Fourier réelle (102) suivi d'un complexe inverse transformation Fourier.

3. Méthode de revendication 1 ou 2, **caractérisée en ce que** le processeur de signal transforme le complexe signal numérique basé sur la durée de temps dans un signal numérique d'amplitude basé sur la durée de temps (A) et dans un signal numérique de phase basé sur la durée de temps correspondant ($\varphi$).

4. Méthode selon l'une des revendications précédentes, **caractérisée en ce que** le processeur de signal numérique comporte une mémoire d'amplitude (560), dans laquelle est stocké un signal numérique d'amplitude filtré basé sur la durée de temps, comme a été obtenu à partir de précédents mesures, et cela chaque fois qu'un nouveau signal numérique d'amplitude filtré basé sur la durée de temps est déterminé à partir du signal numérique d'amplitude basé sur la durée de temps et du signal numérique filtré d'amplitude basé sur la durée de temps stocké.

5. Méthode selon la revendication 4, **caractérisée en ce que** le processeur de signal numérique comporte une mémoire de fréquence, dans laquelle une fréquence moyenne estimée du signal, obtenu à partir des signaux numériques de phase basés sur la durée de temps précédemment obtenus, est stockée.

6. Méthode selon la revendication 5, **caractérisée en ce que** en utilisant la méthode des moindres carrés pondérée (800, 430, 124, 144) une histoire de phase basée sur la durée de temps est estimée à partir de la fréquence estimée et du signal numérique de phase basée sur la durée de temps.

7. Méthode selon la revendication 6, **caractérisée en ce que** le signal numérique filtré d'amplitude basé sur la durée de temps procure les facteurs de pondération.

8. Méthode selon la revendication 7, **caractérisée en ce que** le paramètre physique est déterminé a base d'un passage par zéro dans l'histoire estimée de phase basée sur la durée de temps qui soit le plus proche d'un maximum dans le signal numérique filtré d'amplitude basé sur la durée de temps.

9. Méthode selon l'une des revendications précédentes, **caractérisée en ce que** un signal d'interférence ne comportant pas un paramètre physique à mesurer est soustrait du signal basé sur la durée de temps, du signal numérique basé sur la durée de temps ou signal complexe numérique basé sur la durée de temps avant que le signal complexe numérique basé sur la durée de temps soit traité plus amplement.

10. Méthode selon l'une des revendications précédentes, **caractérisée en ce que** des signaux provenant d'au moins deux capteurs différents (50) sont corrélés de telle manière que le signal basé sur la durée de temps de chaque capteur (50) est corrélé avec chacun des autres signaux basés sur la durée de temps, ayant pour résultat la corrélation de toutes les différentes combinaisons de deux signaux basés sur la durée de temps.

11. Méthode selon l'une des revendications précédentes, **caractérisée en ce que** l'histoire est prise en considération par le modèle physique employé.

12. Méthode selon l'une des revendications précédentes, **caractérisée en ce que** la proportion de la variation d'une mesure présente et la variation des mesures précédentes déterminent l'histoire à prendre en considération.

13. Méthode selon l'une des revendications précédentes, **caractérisée en ce que** les données mesurées sont déballées pour enlever des discontinuités.

14. Méthode selon la revendication 10 ou l'une des revendications 11-13 qui précèdent, quand, selon la revendication 10, **caractérisée en ce que** tous les signaux corrélés de tous les capteurs (50) entrent dans un seul procédé d'optimisation, de préférence un procédé des moindres carrés (430).

15. Méthode selon l'une des revendications précédentes, **caractérisée en ce que** un paramètre d'analyse de mouvement et/ou d'information et/ou de la distance directionnelles d'une source est calculé.

16. Méthode selon l'une des revendications précédentes, **caractérisée en ce que** des paramètres physiques des objets mobiles placés au-dessus d'une surface de l'eau ou au-dessus de la terre sont mesurés.

17. Utilisation de la méthode selon l'une des revendications 1-16 qui précèdent pour déterminer le mouvement et la force du bruit des objets mobiles au-dessus d'une surface de l'eau ou au-dessus de la terre.

18. Appareil pour extraire au moins un paramètre physique, n'étant pas un paramètre physique de courant liquide dans une pipe, d'un signal acoustique basé sur la durée de temps, comportant au moins deux capteurs (000, 50, 310), situés au-dessus d'une surface d'eau. Ne pas étant des capteurs fixés sur ou dans une pipe, extérieur ou au-dessus de la terre pour convertir le signal acoustique basé sur la durée de temps dans un signal électrique (5), un processeur de signal et un processeur de signal numérique, reliés aux capteurs (000, 50, 310) et procuré d'un convertisseur analogique-numérique (2000, 340, 90), **caractérisés en ce que** le processeur de signal numérique soit équipé de moyens pour dériver un premier signal numérique complexe basé sur la durée de temps (400, 360, 370), un moyen de convertir (500, 390, 142) relié aux moyens pour la dérivation d'un premier signal numérique complexe basé sur la durée de temps pour convertir le signal numérique complexe basé sur la durée de temps dans un signal d'amplitude basé sur la durée de temps (A) et une signal de phase basé sur la durée de temps ($\varphi$), une mémoire d'amplitude (560, 405) reliée aux moyens de convertisseur pour stocker le signal d'amplitude basé sur la durée de temps et aux moyens d'une mémoire de phase (570) pour stocker le signal de phase basé sur la durée de temps, et les moyens pour déterminer au moins un seul paramètre physique sur la base d'une histoire de phase basé sur la durée de temps et d'une histoire d'amplitude basé sur la durée de temps du signal complexe numérique basé sur la durée de temps.

19. Appareil selon la revendication 18, **caractérisé en ce que** les moyens pour dériver un signal numérique complexe premier basé sur la durée de temps comporte un filtre de Hilbert (370) ou un filtre comportant une transformation Fourier réelle (102) et une transformation Fourier complexe inverse.

20. Appareil selon la revendication 18 ou 19, **caractérisé en ce que** le processeur de signal numérique soit arrangé pour convertir un premier signal numérique complexe basé sur la durée de temps en un signal numérique d'amplitude basé sur la durée de temps et un signal numérique de phase basé sur la durée de temps correspondant.

21. Appareil selon la revendication 20, **caractérisé en ce que** le processeur de signal numérique soit équipé d'une mémoire d'amplitude, pour stocker un signal d'amplitude numérique filtré basé sur la durée de temps, dérivé des mesures précédentes, et une mémoire de fréquence, pour stocker une fréquence moyenne estimée, dérivée du signal numérique basé sur la durée de temps des mesures précédentes.

22. Appareil selon la revendication 21, **caractérisé en ce que** le processeur de signal numérique soit équipé de moyens de filtration pour dériver un nouveau signal numérique filtré d'amplitude basé sur la durée de temps à partir d'un signal numérique d'amplitude basé sur la durée de temps et d'un signal numérique filtré d'amplitude basé sur la durée de temps stocké dans la mémoire d'amplitude et pour dériver une nouvelle fréquence moyenne du signal basé sur la durée de temps reçu d'un signal numérique de phase basé sur la durée de temps et d'une fréquence moyenne stockée dans la mémoire de fréquence.

23. Appareil selon la revendication 22, **caractérisé en**

ce que le processeur de signal numérique soit équipé de moyens de pondération, pour estimer une histoire de phase basé sur la durée de temps en utilisant une méthode pondérée des moindres carrés, de la fréquence estimée du signal et des séries des estimations de phase basé sur la durée de temps, où le signal numérique d'amplitude filtré basé sur la durée de temps fournit les facteurs de pondération.

24. Appareil selon l'une des revendications 18-23 qui précèdent, **caractérisé en ce que** le processeur de signal numérique est arrangé pour dériver des paramètres physiques du signal à partir de l'histoire de phase basé sur la durée de temps.

25. L'appareil selon l'une des revendications 18-24 qui précèdent, **caractérisé en ce que** le processeur de signal numérique est en plus fourni d'une mémoire d'interférence pour stocker des interférences représentant un deuxième signal complexe numérique basé sur la durée de temps, dérivé des signaux complexes numériques reçus, et avec une procédé de soustrait pour soustraire le deuxième signal complexe numérique basé sur la durée de temps du premier signal complexe numérique basé sur la durée de temps, avant que ce premier signal complexe numérique basé sur la durée de temps ne soit traité plus amplement.

26. Véhicule avec des moyens pour la propagation ou le mouvement équipé pour la mesure des paramètres physiques d'objets qui se déplacent au-dessus d'une surface de l'eau ou au-dessus de la terre comportant un appareil selon n'importe laquelle des revendications précédentes 18-25.

27. L'appareil des revendications 18-25 comportant un ordinateur chargé avec un programme de logiciel comportant des moyens de code adaptés à l'exécution des étapes suivantes quand ledit programme est exécuté sur l'ordinateur :

    - convertir des signaux numériques basés sur la durée de temps en signaux complexes numériques basés sur la durée de temps,
    - convertir les signaux numériques complexes basés sur la durée de temps en signaux numériques basés sur la durée de temps et en signaux numériques de phase et signaux numériques d'amplitude basés sur la durée de temps,
    - stocker des signaux numériques de phase basés sur la durée de temps dans des moyens de mémoire de phase,
    - stocker des signaux numériques d'amplitude basés sur la durée de temps dans des moyens de mémoire d'amplitude,
    - de trouver une première estimation de l'amplitude maximum du présent signal d'amplitude basé sur la durée de temps en utilisant les données d'amplitude basées sur la durée de temps précédentes,

- mettre en structure linéaire les données numériques de phase basées sur la durée de temps comme fonction de la base de temps associée en utilisant la première évaluation de l'amplitude maximum,

- calculer la tangente et l'abscisse des données de phase comme une fonction de la base de temps associée.

- calculer un paramètre physique en utilisant la tangente, abscisse et un paramètre physique précédemment calculé.

FIG. 1

FIG.2A

FIG.2B

FIG. 3

FIG. 4A

FIG. 4B

FIG. 4C

EP 1 216 422 B1

FIG. 5

FIG. 6

EP 1 216 422 B1

EP 1 216 422 B1

FIG. 7

FIG. 8

EP 1 216 422 B1

FIG. 8A

FIG. 8B

EP 1 216 422 B1

FIG. 9

FIG. 10